# EUROPEAN PATENT APPLICATION

(11) **EP 1 062 898 A1**
(43) Date of publication of application: **27.12.2000**
(21) Application number: 99830400.0
(22) Date of filing: 24.06.1999
(51) Int. Cl.: A47J 43/10

(54) **Multi-purpose manually-operated device in particular for beverage preparation**

(71) Applicant: Beniamino Holdings S.r.l., 25067 Lumezzane S.A. (Brescia) (IT)
(72) Inventor: Ghidini, Tiziano, 25067 Lumezzane S.A. (Brescia) (IT)
(74) Representative: Ghioni, Carlo Raoul Maria

(57) **Abstract**

A multi-purpose manually-operated device for beverage preparation comprises a vessel (2), a closing cover or lid (3) to be removably engaged with the vessel, an emulsifying element (4), a driving rod (5) for the emulsifying element slidably engaged in a through hole (3b) of the lid (3), and stop means (7) to be selectively activated to block the driving rod (5) in the through hole (3b) in such a manner that the emulsifying element (4) can be immobilized in a position at which it is close to the lid.

## Description

The present invention relates to a manually-operated multi-purpose device in particular for beverage preparation comprising a vessel with a top open and adapted to hold a beverage, a closing cover or lid to be removably engaged with the vessel at an upper rim of same, an emulsifying element adapted to emulsify the beverage and a driving rod for the emulsifying element slidably engaged in a through hole of the lid and having a lower end rigidly connected with the emulsifying element and an upper grip end disposed externally of the lid.

It is known that when beverages such as cappuccino and the like are to be obtained without using steam jets to make the milk into an emulsion and form the typical froth, appropriate manually-operated devices can be employed as described, for example, in the European Patent 713 669 in the name of the same Applicant.

Such devices comprise a beverage-holding vessel having a top open to the rim of which a lid can be removably engaged. Within the vessel, during use, an emulsifying element substantially shaped like a plunger and adapted to emulsify the beverage is reciprocated by a driving rod. In more detail, the driving rod is slidably engaged in a through hole of the lid and has a lower end rigidly connected with the plunger element through a screw-threaded fit for example, and an upper grip end, provided with a working knob for example, disposed externally of the lid. The plunger-shaped emulsifying element in the above mentioned patent comprises a disc-shaped body formed of a perimetral annular element connected, via radially-extending arms, to a central hub in which the lower end of the driving rod is fitted. Extending between the radially-extending arms and the annular element is a net through which, during the reciprocating motion of the plunger element, a forced passage of the beverage takes place so that, as a result, froth formation occurs by effect of the inclusion of small air bubbles within the milk.

Known devices like the one briefly described above are practically advantageously utilized only when cappuccino and similar hot beverages are to be obtained.

Also known are other types of manually-operated devices, commonly referred to as shakers, consisting of vessels generally made of metal and provided with lids having a hermetic closure and used for mixing, by shaking, ingredients for cocktails that, as known, consist of spirits-based mixtures into which ice cubes are blended.

Under this situation, the technical task underlying the present invention is to conceive a manually-operated device offering the possibility of performing several different functions, i.e. a device practically adapted to be not only used for preparing cappuccino and the like, but also suitable for preparation of whipped cream, cream, zabaglione and even cocktails or at all events beverages or drinks that need to be hand-shaken for obtaining them.

The technical task mentioned is substantially achieved by a multi-purpose manually-operated device, in particular for beverage preparation, which is characterized in that it comprises stop means to be selectively activated to block said driving rod in the lid hole, close to the lower end of the rod, so as to immobilize the emulsifying element on reaching of its position close to the lid itself.

Description of a preferred but non-exclusive embodiment of a device in accordance with the invention is now given hereinafter, by way of non-limiting example, with reference to the accompanying drawings, in which:

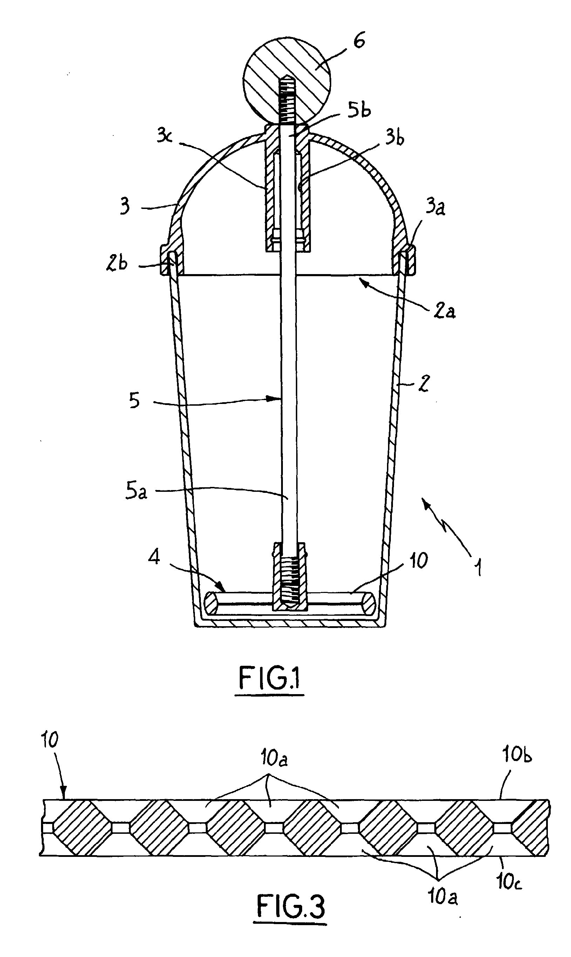

- Fig. 1 is a longitudinal section of the device in which the plunger-shaped emulsifying element is disposed at the lower limit of its stroke;
- Fig. 2 is similar to Fig. 1, where however the plunger element is disposed at an upper position corresponding to its blocking on its coming near the device lid;
- Fig. 3 is a cross-sectional view of a portion of the plunger-shaped emulsifying element, to an enlarged scale;
- Fig. 4 shows the driving rod stop means in the lid, to an enlarged scale.

With reference to the drawings, the device in accordance with the invention is generally identified by reference numeral 1.

It comprises a vessel 2 for holding a beverage which has a top opening 2a delimited by a rim 2b. A preferably cap-shaped lid 3 can be removably disposed in engagement with rim 2b; perimetrally, the lid has a recessed seating 3a to house the upper rim 2b and defining, in cooperation therewith, sealing means adapted to prevent leakage of liquids from vessel 2.

Advantageously, for the purpose, the whole vessel 2 and in particular the upper rim 2b is of flaring shape so that it can be fitted by force into the hollow seating 3a causing, in addition to a sealing action, a safe engagement between lid 3 and vessel 2.

Operatively movable within the vessel is a substantially plunger-shaped emulsifying element 4, adapted to make into an emulsion the beverage held in the vessel. A driving rod 5 for manual operation of the plunger element 4 is engaged and slidably guided in a through hole 3b of lid 3 extending in a tailpiece 3c of said lid projecting downwardly.

The driving rod 5 has a lower end 5a rigidly connected to the plunger element 4, by a screw-threaded fit for example, and an upper grip end 5b disposed externally of lid 3. Preferably connected to the upper end 5b is a working knob 6.

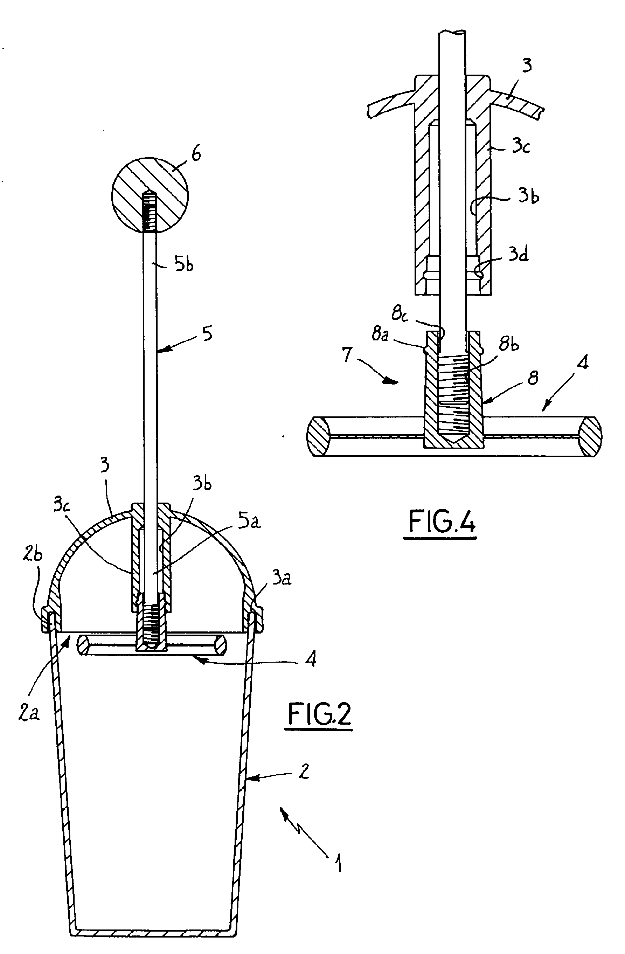

In an original manner the device comprises stop means 7 to be selectively activated to block the driving rod 5 in the through hole 3b of lid 3 and disposed close to the lower end 5a of the rod, for the purpose of immobilizing the plunger element 4 in a position at which it is close to said lid 3 (see Fig. 2).

The stop means 7 practically comprises a body 8 substantially of truncated conical form, disposed at the lower end 5a of the driving rod 5 and defined by a central expansion of the emulsifying element 4 extending upwardly.

The body 8 of truncated conical form, preferably made of the same partly flexible plastic material of which the plunger element 4 is made, is adapted to be at least partly introduced by forced fitting into the through hole 3b so as to create a fit therewith and sealingly close said through hole 3b.

In order to ensure locking of the plunger element 4 to lid 3, the body 8 of truncated conical form is provided with an annular swelling 8a intended for snap-fitting into a corresponding annular groove 3d formed in the through hole 3b of the lid. In addition, the body 8 of truncated conical form is provided with an axially pierced seat 8b for matching with the lower end 5a of the driving rod 5.

The pierced seat 8b has a mouth 8c forming a hollow space 8c together with a portion of the driving rod end 5a, to give more flexibility to the corresponding portion of said body 8 of truncated conical form.

In this manner, when the body 8 of truncated conical form is fitted into the through hole 3b, narrowing of the hollow space 8c occurs so that mouth 8c is pressed clamp-wise against the lower end 5a of the rod thus creating a hermetic seal with the latter.

It should be recognized that due to the greater flexibility of the body 8 of truncated conical form achieved with the aid of mouth 8c, a steadier fit can be accomplished and a better seal is created between said body and the wall of the through hole 3b.

The plunger-shaped emulsifying element 4 comprises a disc-shaped body 10 passed through by a plurality of small through holes 10a each of which in an original manner has a substantially flaring conformation starting from an equatorial plane of the plunger element 4 and extending both upwardly and downwardly, as viewed from Fig. 3.

Practically each small hole 10a defines an opening on an upper face 10b and a lower face 10c of the disc-shaped body 10, the area of which is greater than the area of the same opening at the equatorial plane of the plunger element.

Operation and use of the device described above mainly as regards structure are as follows.

When preparation of beverages such as cappuccino and the like, or preparation of whipped cream, cream or zabaglione is wished, after introducing all necessary ingredients into vessel 2 and associating the lid with said vessel, making of an emulsion is started by manually acting on the driving rod 5 so that the plunger element 4 may carry out reciprocating strokes between lower and upper positions thereof.

If one wishes to use the device as a shaker, first of all the plunger element is disposed at its closest position to the lid by pulling the working knob so that the body 8 of truncated conical form is partly inserted in the device and the annular swelling 8a is fitted into the annular groove 3c of the through hole 3b in the lid.

In this way the driving rod 5 is in its position of maximum projection (see Fig. 3).

After all ingredients for making the beverage are introduced into the vessel together with some ice cubes, the lid is placed over the vessel to sealingly close it and the whole device is manually shaken.

When the vessel is being emptied, the plunger element can be used as a filtering member in order to prevent the ice cubes from being poured out too, after disengagement of the rod and while keeping the working knob 6 close to the lid.

The invention achieves important advantages.

In fact, the device can be easily and readily arranged for preparation both of hot beverages, such as cappuccino, and of cold drinks such as cocktails, or other types of food such as creams, zabaglione and whipped cream.

It will be recognized that being the two above mentioned functions combined together in a single device, obviously a reduction in costs is achieved as compared with use of two separated devices each intended for a single function and in addition also the requirement of saving room is met.

Finally, it will be appreciated that combining two different functions together in a single device also enables accomplishment of these functions to be carried out in succession on one and the same ingredient mixture so as to obtain new types of beverages by suitably proportioning the emulsifying action and shaking action, depending on requirements and creativity.

## Claims

1. A multi-purpose manually-operated device for beverage preparation, comprising:
- a vessel (2) having a top opening (2a) and adapted to hold a beverage,
- a closing cover or lid (3) to be removably engaged with said vessel at an upper rim (2b) thereof,
- an emulsifying element (4) to be operatively inserted into the vessel (2) and adapted to make the beverage into an emulsion, and a driving rod (5) for the emulsifying element (4) which is slidably engaged in a through hole (3b) of the lid (3) and has a lower end (5a) rigidly connected to the emulsifying element (4) and an upper grip end (5b) disposed externally of the lid (3),
characterized in that it comprises stop means (7) to be selectively activated to block said driving rod (5) in the through hole (3d) of the lid (3) close to said lower end (5a), so that the emulsifying element (4) is immobilized in a position at which it is close to the lid itself.

2. A device as claimed in claim 1, characterized in that said stop means (7) comprises a body (8) substantially of truncated conical form disposed at the lower end (5a) of the driving rod (5) and adapted to be at least partly inserted by forced fitting into said through hole (3b) so as to sealingly close the latter.

3. A device as claimed in claim 2, characterized in that said body (8) of truncated conical form is provided with an annular swelling (8a) for engagement in a corresponding annular groove (3c) formed in said through hole (3b).

4. A device as claimed in claim 2, characterized in that said body (8) of truncated conical form is defined by a central expansion of said emulsifying element (4) and has an axially pierced seat (8b) for mating with said lower end (5a) of the driving rod (5).

5. A device as claimed in claim 3, characterized in that said body (8) of truncated conical form is made at least partly of flexible material and in that said pierced seat (8b) has a mouth (8c) forming a hollow space (8c) with a portion of the end (5a) of the driving rod (5).

6. A device as claimed in claim 2, characterized in that it comprises sealing means (3a) interposed between the upper rim (2b) of the vessel (2) and said lid (3).

7. A device as claimed in claim 1, characterized in that said emulsifying element (4) comprises a disc-shaped body (10) passed through by a plurality of small through holes (10a), and in that each small through hole has a widening-out conformation both upwardly and downwardly starting from an equatorial plane of the emulsifying element, so that on the upper face (lOb) and lower face (10c) of the disc-shaped body (10) an opening is defined the area of which is greater than the area of the opening itself at said equatorial plane.
